# EUROPEAN PATENT APPLICATION

(11) **EP 3 021 140 A1**
(43) Date of publication of application: **18.05.2016**
(21) Application number: 14200709.5
(22) Date of filing: 31.12.2014
(51) Int. Cl.: G01S 17/93, G01S 7/497, B60Q 9/00, G08G 1/16, G01S 13/93

(54) **Vehicle blind spot monitoring system and vehicle using the same**

(30) Priority: 17.11.2014 TW 103139834
(71) Applicant: Hon Hai Precision Industry Co., Ltd., New Taipei City (TW)
(72) Inventor: Lee, Chia-Yen, New Taipei (TW)
(74) Representative: Stuttard, Garry Philip

(57) **Abstract**

A blind spot monitoring system for a vehicle includes an alarming module, an obstacle detector, a controlling module, and a regulating module. The obstacle detector is configured to detect whether an obstacle comes into a detection field of the obstacle detector when the vehicle makes a turn, and output a detecting signal when it is determined by the obstacle detector that the obstacle comes into the detection field. The controlling module is configured to activate the alarming module to issue an alarm when the controlling module receives the detecting signal. The regulating module is configured to detect a turning angle of the vehicle, and to regulate the detection field of the obstacle detector according to the turning angle, allowing the detection field to at least encompass a field of inner wheel difference of the vehicle.

## Description

### CROSS-REFERENCE TO RELATED APPLICATIONS

This application claims priority to Taiwanese Patent Application No. 103139834 filed on November 17, 2014 in the Taiwan Intellectual Property Office, the contents of which are incorporated by reference herein.

### FIELD

The subject matter herein generally relates to blind spot monitoring systems, and particularly to a vehicle blind spot monitoring system and a vehicle using the same.

### BACKGROUND

With the rapid advance and development in technology, various driving aids are provided to enhance transportion safety. Due its specific structure, when a typical articulated vehicle makes a turn, a swing arc of an inner rear wheel whose direction in relation to the vehicle does not change in relation to a vehicle maneuver having a smaller radius than a swing arc of an inner front wheel that is caused to point to the left by the vehicle maneuvering. The difference in radius of the swing arcs is the inner wheel difference. A driver of the articulated vehicle has to tackle problems such as the inner wheel difference being too large when the vehicle makes a U-turn in relation to blind spots. Therefore, providing suitable driving aids for use in the articulated vehicle to reduce driving difficulty and to increase transport safety has become a prominent task for the industries.

### SUMMARY

According to a first aspect of the disclosure, a blind spot monitoring system for a vehicle includes an alarming module, an obstacle detector, a controlling module, and a regulating module. The obstacle detector is configured to detect whether an obstacle comes into a detection field of the obstacle detector when the vehicle makes a turn, and output a detecting signal when it is determined by the obstacle detector that the obstacle comes into the detection field. The controlling module is configured to activate the alarming module to issue an alarm when the controlling module receives the detecting signal. The regulating module is configured to detect a turning angle of the vehicle, and to regulate the detection field of the obstacle detector according to the turning angle, allowing the detection field to at least encompass a field of inner wheel difference of the vehicle.

According to a second aspect of the disclosure, a vehicle includes a body, a front wheel, a rear wheel and a blind spot monitoring system. The front wheel and the rear wheel are coupled to a same side of the body. The blind spot monitoring system includes an alarming module, an obstacle detector, a controlling module, and a regulating module. The obstacle detector is configured to detect whether an obstacle comes into a detection field of the obstacle detector when the vehicle makes a turn, and output a detecting signal when it is determined by the obstacle detector that the obstacle comes into the detection field. The controlling module is configured to activate the alarming module to issue an alarm when the controlling module receives the detecting signal. The regulating module is configured to detect a turning angle of the vehicle, and to regulate the detection field of the obstacle detector according to the turning angle, allowing the detection field to at least encompass a field of inner wheel difference of the vehicle.

### BRIEF DESCRIPTION OF THE DRAWINGS

Implementations of the present technology will now be described, by way of example only, with reference to the attached figures.
FIG. 1 is a block diagram of one embodiment of a blind spot monitoring system.
FIG. 2A is a plan view of a vehicle employing the blind spot monitoring system as shown in FIG. 1, showing the vehicle make a turn with a first angle.
FIG. 2B is a plan view of the vehicle as shown in FIG. 2A, showing the vehicle make a turn with a second angle greater than the first angle.
FIG. 2C is a plan view of the vehicle as shown in FIG. 2A, showing the vehicle make a turn with a third angle greater than the second angle.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape or other word that substantially modifies, such that the component need not be exact. For example, substantially cylindrical means that the object resembles a cylinder, but can have one or more deviations from a true cylinder. The term "comprising" when utilized, means "including, but not necessarily limited to"; it specifically indicates open-ended inclusion or membership in the so-described combination, group, series and the like.

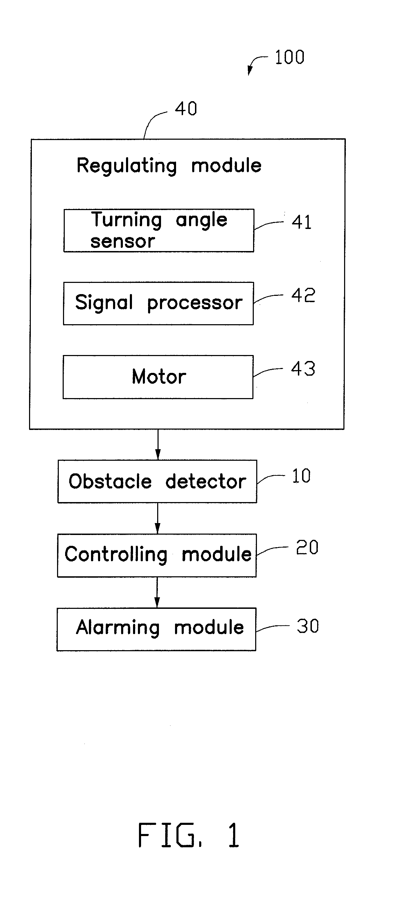

FIG. 1 illustrates a block diagram of one embodiment of a blind spot monitoring system 100 for a vehicle, especially for an articulated vehicle. The blind spot monitoring system 100 is configured to monitor a blind spot when the vehicle makes a turn, such as a U-turn, and issue an alarm when an obstacle comes into the blind spot. The term "obstacle" collectively means obstructive objects, such as, for example, other vehicles, human bodies, animals, bicycles, or buildings.

The blind spot monitoring system 100 includes an obstacle detector 10, a controlling module 20, an alarming module 30, and a regulating module 40. The obstacle detector 10 is configured to detect whether an obstacle comes into a detection field of the obstacle detector 10 when the vehicle makes a turn, and output a detecting signal to the controlling module 20 when it is determined by the obstacle detector 10 that an obstacle comes into the detection field. The controlling module 20 is configured to activate the alarming module 30 to alarm when the controlling module 20 receives the detecting signal.

The alarm module 30 can issue an alarm by means of sound, light and vibration. For example, the alarm module 30 can include a loudspeaker that can be disposed in the cab of the vehicle. When an obstacle is detected by the obstacle detector 10, the controlling module 20 can control the loudspeaker to output an alarm sound. The alarm module 30 can further include a vibrator disposed in a driver's seat. When an obstacle is detected by the obstacle detector 10, the controlling module 20 can drive the vibrator to vibrate.

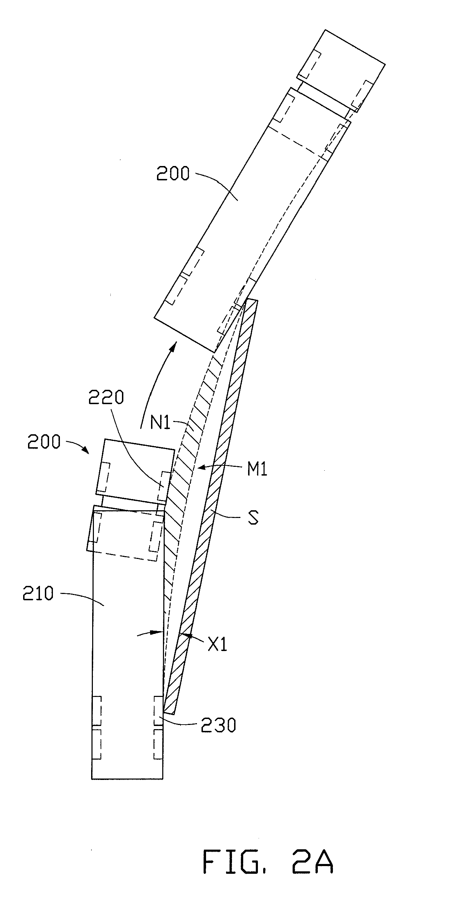

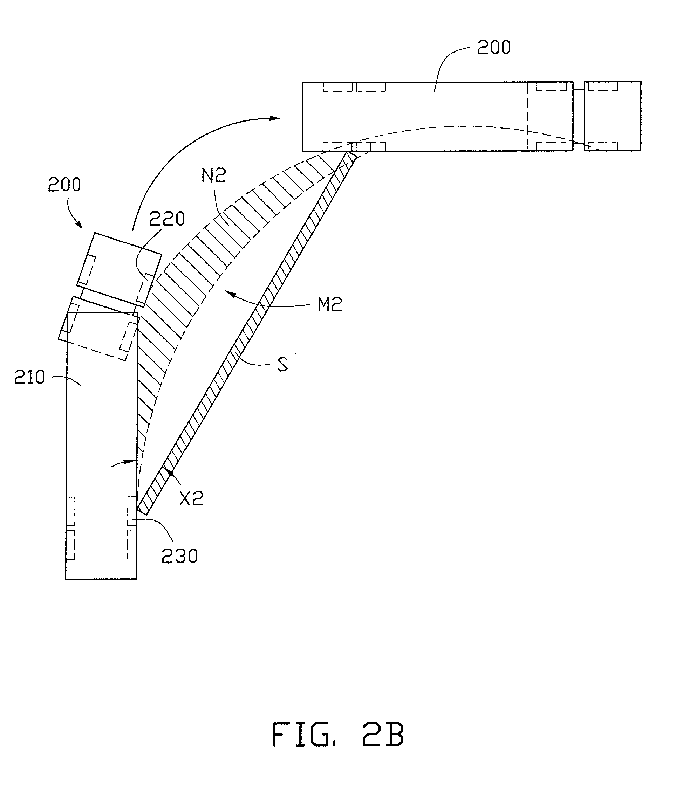

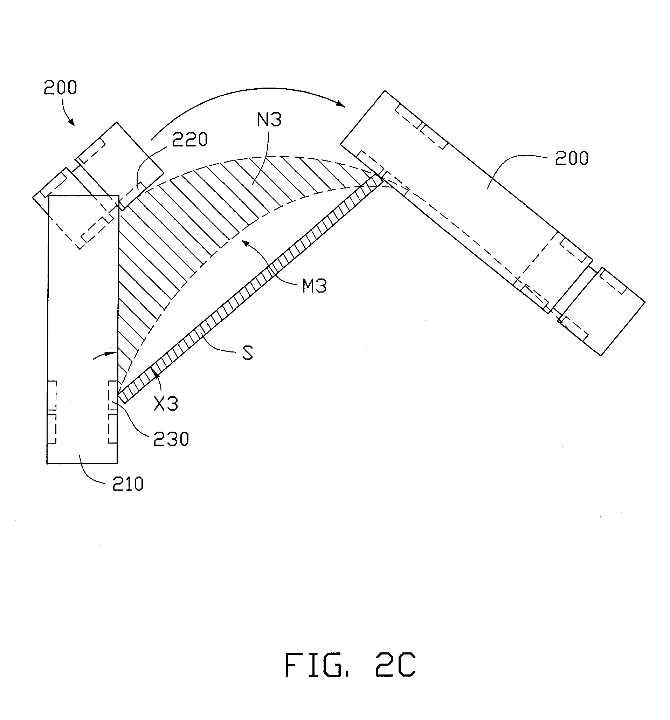

The regulating module 40 is configured to detect a turning angle of the vehicle, and regulate the detection field of the obstacle detector 10 according to the detected turning angle, allowing the detection field to at least encompass a field of inner wheel difference of the vehicle. The field of inner wheel difference of the vehicle is designated as a field (such as the fields N1-N3 as shown in FIGS. 2A-2C) defined between a path (or swing arc) of an inner front wheel (such as a front wheel 220 as shown in FIGS. 2A-2C) and a path (or swing arc) of an inner rear wheel (such as a rear wheel 220 as shown in FIGS 2A-2C).

FIGS. 2A-2C are plan views of a vehicle 200 employing the blind spot monitoring system 100 as shown in FIG. 1, showing the vehicle 200 making three different turns respectively and turning angles of the vehicle 200 are successively increased. The vehicle 200 includes a body 210, a front wheel 220, and a rear wheel 230. The front wheel 220 and the rear wheel 230 are positioned at a same side of the body 210. The obstacle detector 10 (shown in FIG. 1) can be attached to the body 210 adjacent to the rear wheel 230. For example, the obstacle detector 10 is positioned above the rear wheel 230. In at least one embodiment, the obstacle detector 10 is an infrared sensor that is configured to project light rays to form a field of view S. As illustrated in FIGS. 2A-2C, the field of view S is a substantially rectangular band in shape, the detection field of the obstacle sensor 10 is a field defined between the field of view S and the body 210.

When turning angles of the front wheel 210 of the vehicle 200 are successively increased as illustrated in FIGS. 2A-2C, angles formed between the field of view S and the body 210 are defined as X1-X3 respectively, detection fields of the obstacle sensor 10 are defined as M1-M3, respectively, and fields of inner wheel difference are defined N1-N3 respectively. It can be derived from FIGS. 2A-2C that when the turning angles of the front wheel 210 of the vehicle 200 are increased, the field of inner wheel difference, that is the blind spot of the driver, is increased accordingly. In addition, by regulating (such as increasing) a projecting direction of the light rays, the angle formed between the field of view S and the body 210 is regulated (such as increased), and the detection field is regulated (such as increased) accordingly, to at least encompass the field of inner wheel difference. When an obstacle passes through the field of view S and comes into the detection field of the obstacle detector 10, the obstacle detector 10 can output the detecting signal.

Referring back to FIG. 1, in at least one embodiment, the regulating module 40 is configured to regulate the angle between the projecting direction of the light rays projected by the obstacle detector 10 and the body 210 according to the turning angle of the vehicle 200. In other words, the regulating module 40 is configured to regulate the angle formed between the field of view S of the obstacle detector 10 and the body 210 according to the turning angle of the vehicle 200. The regulating module 40 includes a turning angle sensor 41, a signal processor 42 and a motor 43. The turning angle sensor 41 is configured to detect the turning angle of front wheel 220 of the vehicle 200, and output a sensing signal to the signal processor 42 in response to the detection. The signal processor 42 is electronically coupled to the turning angle sensor 41, and configured to output a control signal to the motor 43 according to the sensing signal. The motor 43 is electronically coupled to the signal processor 42 and configured to move the obstacle sensor to regulate the projecting direction of the light rays projected by the obstacle sensor 10 such that the angle between the projecting direction and the body 210 and the detection field are regulated.

It can be understood that, when the vehicle 200 does not make a turn or the turning angle of the vehicle is very small, the detection field becomes narrow, and no obstacle will come into the detection field. The alarming module 30 therefore will not alarm, and will not produce an interference to the driver.

In summary, the regulating module 40 can regulate the detection field of the obstacle detector 10 according to the turning angle of the vehicle 200, an accuracy of the blind spot monitoring can improved.

The embodiments shown and described above are only examples. Many details are often found in the art. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including the full extent established by the broad general meaning of the terms used in the claims. It will therefore be appreciated that the embodiments described above may be modified within the scope of the claims.

## Claims

1. A blind spot monitoring system for vehicle comprising:
an alarming module;
an obstacle detector configured to:
detect whether an obstacle comes into a detection field of the obstacle detector when the vehicle makes a turn; and
output a detecting signal when it is determined by the obstacle detector that the obstacle comes into the detection field;
a controlling module electronically coupled to the alarming module and the obstacle detector, and configured to activate the alarming module to issue an alarm when the controlling module receives the detecting signal; and
a regulating module electronically coupled to the obstacle detector and configured to
detect a turning angle of the vehicle; and
regulate the detection field of the obstacle detector according to the turning angle, allowing the detection field to at least encompass a field of inner wheel difference of the vehicle.

2. The blind spot monitoring system of claim 1, wherein the obstacle detector is an infrared sensor configured to project light rays to form a field of view, the detection field of the obstacle sensor is a field defined between the field of view and a body of the vehicle; when an obstacle passes through the field of view and comes into the detection field, the obstacle sensor outputs the detecting signal.

3. The blind spot monitoring system of claim 2, wherein the obstacle detector is attached to the body of the vehicle adjacent to a rear wheel of the vehicle.

4. The blind spot monitoring system of any preceding claim, wherein the regulating module is configured to
increase the detection field of the obstacle detector when it is detected by the regulating module that the turning angle is increased; and
decrease the detection field of the obstacle detector when it is detected by the regulating module that the turning angle is decreased.

5. The blind spot monitoring system of claim 4, wherein the regulating module comprises:
a turning angle sensor configured to:
detect the turning angle of the vehicle; and
output a sensing signal to the signal processor in response to the detection;
a signal processor electronically coupled to the turning angle sensor and configured to output a control signal to the motor according to the sensing signal; and
a motor electronically coupled to the signal processor and configured to move the obstacle sensor to regulate the projecting direction of the light rays projected by the obstacle sensor.

6. The blind spot monitoring system of any preceding claim, wherein the alarm module issues the alarm by means of at least one of sound, light and vibration.

7. A vehicle comprising:
a body;
a front wheel and a rear wheel coupled to a same side of the body; and
a blind spot monitoring system comprising:
an alarming module;
an obstacle detector configured to:
detect whether an obstacle comes into a detection field of the obstacle detector when the vehicle makes a turn; and
output a detecting signal when it is determined by the obstacle detector that the obstacle comes into the detection field;
a controlling module electronically coupled to the alarming module and the obstacle detector and configured to activate the alarming module to issue an alarm when the controlling module receives the detecting signal; and
a regulating module electronically coupled to the obstacle detector and configured to:
detect a turning angle of the vehicle; and
regulate the detection field of the obstacle detector according to the turning angle, allowing the detection field to at least encompass a field of inner wheel difference of the vehicle.

8. The vehicle of claim 7, wherein the obstacle detector is an infrared sensor configured to project light rays to form a field of view, the detection field of the obstacle sensor is a field defined between the field of view and the body of the vehicle; when an obstacle passes through the field of view and comes into the detection field, the obstacle sensor outputs the detecting signal.

9. The vehicle of claim 8, wherein the obstacle detector is attached to the body of the vehicle adjacent to the rear wheel of the vehicle.

10. The vehicle of claim 7, 8 or 9, wherein the regulating module is configured to:
increase the detection field of the obstacle detector when it is detected by the regulating module that the turning angle is increased; and
decrease the detection field of the obstacle detector when it is detected by the regulating module that the turning angle is decreased.

11. The vehicle of claim 10, wherein the regulating module comprises:
a turning angle sensor configured to:
detect the turning angle of the vehicle; and
output a sensing signal to the signal processor in response to the detection;
a signal processor electronically coupled to the turning angle sensor and configured to output a control signal to the motor according to the sensing signal; and
a motor electronically coupled to the signal processor and configured to move the obstacle sensor to regulate the projecting direction of the light rays projected by the obstacle sensor.

12. The vehicle of claim 7, 8 or 9, wherein the alarm module issues the alarm by means of at least one of sound, light and vibration.
